# EUROPÄISCHE PATENTSCHRIFT

(11) **EP 3 348 457 B1**
(45) Veröffentlichungstag und Bekanntmachung des Hinweises auf die Patenterteilung: **24.06.2020**
(21) Anmeldenummer: 17198896.7
(22) Anmeldetag: 27.10.2017
(51) Int. Cl.: B62D 25/20, B62D 21/02, B62D 21/15, B62D 25/08

(54) **VERSTÄRKUNGSSTREBE FÜR EIN KRAFTFAHRZEUG**
REINFORCEMENT STRUT FOR A MOTOR VEHICLE
APPUI DE RENFORCEMENT POUR UN VÉHICULE AUTOMOBILE

(30) Priorität: 22.12.2016 DE 102016125335
(43) Veröffentlichungstag der Anmeldung: 18.07.2018
(73) Patentinhaber: Benteler Automobiltechnik GmbH, 33102 Paderborn (DE); Audi AG, 85045 Ingolstadt (DE)
(72) Erfinder: Marcussen, Povl Erik, 6270 Tønder (DK); März, Walter, 85051 Ingolstadt (DE)
(74) Vertreter: Sprenger, Gerrit Lars Eike

(56) Entgegenhaltungen:
- EP-A1- 1 577 196
- EP-A1- 1 706 308
- US-A- 3 625 561
- US-A- 5 685 599
- US-A1- 2005 275 182
- US-A1- 2006 175 872
- US-A1- 2006 175 873

## Beschreibung

Die Erfindung betrifft eine Verstärkungsstrebe für ein Kraftfahrzeug. Derartige Bauteile werden innerhalb eines Kraftfahrzeugs eingesetzt, um die Steifigkeit zu erhöhen und die Anforderungen an die Aufprall- und Schutzeigenschaften der Fahrzeugstruktur beziehungsweise der Fahrzeugkarosserie zu erfüllen. Ein Einsatz ist dabei insbesondere als Verbindungsstrebe zwischen den unteren Längsträgern im Vorderwagen sowie unterhalb eines Getriebetunnels der Sicherheitszelle üblich.

Verstärkungsstreben sind seit langem als rohrförmige Blechbauteile im Einsatz, wobei diese in den Enden lokal dreidimensional umgeformt sind und/oder Ausnehmungen zur Kopplung mit der Fahrzeugstruktur beziehungsweise Karosserie aufweisen. Diese Verstärkungsstreben sind schwer und weisen wenig Spielraum für die Lasteinleitung auf. Die Steifigkeit, insbesondere gegen Torsion, sowie die axiale Energieaufnahme ist bei Verwendung derartiger Verstärkungsstreben unzureichend.

Zudem ist es bekannt, zwei Blechteile durch Zug-Druck-Umformen zu einem Hohlprofil zusammenzufügen, welches an der Oberseite oder an der Unterseite durch eine oder mehrere parallel zur Längsachse verlaufende Prägungen versteift ist. In stirnseitigen Endbereichen können Fügestellen vorgesehen sein, zur Kopplung mit der Fahrzeugstruktur.

Eine weitere bekannte Verstärkungsstrebe umfasst ein längliches Mehrkammerprofil mit einer entlang einer Hauptlängsachse verlaufenden Haupthohlkammer und einer daneben angeordneten zweiten Hohlkammer, wobei die Haupthohlkammer von der zweiten Hohlkammer längenabschnittsweise durch eine Innenwand getrennt ist. Es kann sich dabei beispielsweise um ein Strangpressprofil aus einer Leichtmetalllegierung handeln. Diese Verstärkungsstreben bieten noch Verbesserungspotential hinsichtlich der Anbindung und Lasteinleitung.

In der US 2006/0175873 A1 ist eine Verbindungsstrebe nach dem Oberbegriff des Patentanspruchs 1 gezeigt. Allerdings ist diese Verbindungsstrebe hinsichtlich Stabilität und Energieaufnahmevermögen verbesserungswürdig.

Die DE68924704T2 beschreibt ein lastaufnehmendes Konstruktionselement mit einem geschlossenen mehrkammerförmigen Querschnitt für einen Space-Frame-Rahmen eines Kraftfahrzeugs. Es weist einen geraden Abschnitt aus einem extrudierten Formteil auf, das wenigstens von einem Ende in Längsrichtung in zumindest zwei einzelne Abschnitte aufgeteilt ist. Dabei ist wenigstens einer der in einem Stück mit dem Konstruktionselement ausgebildeten Abschnitte so geformt, dass dieser unter einem bestimmten Winkel verläuft.

Aus der WO2003072421A1 ist ein mehrteilig aus Stahlblechen gebildeter Profilträger offenbart, welcher mehrere Hohlammern aufweist, die einseitig in Ihren freien Endbereichen gabelförmig in verschiedenen Ebenen auslaufen und so einen einigen Lastpfad in zwei Lastpfade aufteilen.

Das Gebrauchsmuster DE202016101532U1 zeigt einen Bodenquerträger, der sich zwischen Fahrzeugschwellern einer Karosserie erstreckt und mehrteilig aufgebaut ist und sich im Wesentlichen gradlinig erstreckt.

In der DE102007035510A1 wird dagegen ein aus zwei metallischen Halbschalen gebildetes Strebenkreuz für ein Hilfsrahmen eines Fahrzeugfahrwerks dargestellt, wobei die Halbschalen miteinander verschweißt werden, so dass sich ein Hohlprofilquerschnitt in den einzelnen Strebenabschnitten ergibt.

Die DE102005004780B3 beschreibt einen Profilträger, welcher in etwa 120° winkelig zueinander verlaufende Hohlprofilabschnitte aufweist, wobei die Abschnitte jeweils aus einem faserverstärkten Kunststoff hergestellt und miteinander verbunden sind. Nachteilig ist jeweils mehrteilige Ausführung der Bauteile verbunden mit einem hohen Aufwand und für die Crashperformance negativen Effekten durch nötige Fügeverfahren.

Davon ausgehend ist es Aufgabe der Erfindung, eine verbesserte Verstärkungsstrebe aufzuzeigen, welche ein verbessertes Energieaufnahmevermögen und eine bessere Lasteinleitungsmöglichkeit bei gleichzeitiger Gewichtseinsparung aufweist. Aufgabe ist ebenfalls, ein Kraftfahrzeug mit verbesserter Steifigkeit und Crashverhalten insbesondere beim Seitenaufprall aufzuzeigen.

Die erste Aufgabe wird durch die Merkmale des Patentanspruchs 1 gelöst. Die abhängigen Unteransprüche 2 bis 12 sind vorteilhafte Weiterbindungen der Erfindung.

Die Aufgabe bzgl. des Kraftfahrzeugs wird durch die Merkmale des Anspruchs 13 gelöst.

Es wird eine Verstärkungsstrebe für ein Kraftfahrzeug vorgeschlagen, umfassend ein längliches Mehrkammerprofil mit einer entlang einer Hauptlängsachse verlaufenden Haupthohlkammer und einem daneben angeordneten Flachflansch, wobei der Flachflansch einen ersten Längenabschnitt mit einer ersten Längsachse und einen zweiten Längenabschnitt mit einer zweiten Längsachse aufweist, wobei ein Winkel zwischen der Hauptlängsachse und der ersten Längsachse zwischen 20° und 60° beträgt und ein Winkel zwischen der Hauptlängsachse und der zweiten Längsachse zwischen 20° und 60° beträgt.

Gekennzeichnet ist diese Verstärkungsstrebe dadurch, dass die Haupthohlkammer eine Wand an einer Oberseite und eine Wand an einer Unterseite der Verstärkungsstrebe aufweist, wobei die Wand an der Unterseite in Richtung Flachflansch in eine Außenwand übergeht, und die Wand an der Oberseite sowie die Außenwand gemeinsam in den Flachflansch übergehen. Damit wird erreicht, dass ein relativ dickwandiger Flachflansch entsteht, welcher im eingespannten beziehungsweise eingebauten Zustand in der Fahrzeugkarosserie als Schubfeld wirkt. In einem Teil des Mittelabschnitts der Verstärkungsstrebe kann der Flachflansch aber auch ausschließlich durch die Außenwand gebildet sein. Bevorzugt ist der Flachflansch aber im Mittelabschnitt der Verstärkungsstrebe neben der Außenwand zumindest in Form eines schneidtechnisch bedingten Materialrests gebildet.

Durch den Flachflansch wird zum einen erreicht, dass die Verstärkungsstrebe eine optimale Lasteinleitung erlaubt und zusätzliche oder verbesserte Lastpfade bereitstellt.

Bevorzugt ist vorgesehen, dass die Haupthohlkammer zwei gegenüberliegende, stirnseitige Endbereiche aufweist und die Haupthohlkammer in den Endbereichen abgeflacht, insbesondere im Querschnitt grabenförmig abgeflacht, ist. Dadurch wird zum einen eine Verstärkung in axialer Richtung sowie gegen Durchbiegung und Knicken erreicht und zugleich eine optimierte Fügestelle bereitgestellt.

In einer Weiterbildung weist der Flachflansch der Verstärkungsstrebe zwei gegenüberliegende, stirnseitige Endbereiche auf, wobei der Flachflansch in den Endbereichen einen Kragen aufweist. Es ergeben sich für den Flachflansch die Vorteile, dass sie in den Endbereichen durch den Kragen stabilisiert sind und eine erhöhte Biegesteifigkeit aufweisen. Durch die relativ zur Hauptlängsachse winkelig ausgebildeten ersten und zweiten Längenabschnitte mit
entsprechend stabilisierten Endbereichen ist es möglich, Lastpfade in verschiedenen Richtungen auszubilden und/oder die Fahrzeugstruktur mehrachsig zu versteifen.

Zudem kann vorgesehen sein, dass die Haupthohlkammer und/oder der Flachflansch in ihren Endbereichen Fügestellen, insbesondere Ausnehmungen, zur Kopplung mit weiteren Bauteilen der Fahrzeugstruktur aufweisen.

Bevorzugt weist die Haupthohlkammer eine Länge und der Endbereich der Haupthohlkammer eine Teillänge auf, wobei gilt: Teillänge ist kleiner oder gleich 0,4 mal der Länge der Haupthohlkammer. Das bedeutet, dass sich die abgeflachten Endbereiche jeweils über höchstens 40 Prozent der Länge der Haupthohlkammer erstrecken.

Es kann vorgesehen werden, dass der Flachflansch eine Länge aufweist und der Endbereich des Flachflansches über eine Teillänge parallel zueinander verlaufende Längskanten aufweist, wobei gilt, dass die Teillänge des Endbereichs des Flachflansches kleiner gleich 0,4 mal der Länge des Flachflansches ist. Dass bedeutet, dass der Endbereich des Flachflansches deutlich kürzer ist als die Länge des Flachflansches. Bevorzugt ist diese Teillänge aber auch kürzer als die Teillänge des Endbereichs der Haupthohlkammer.

Dazu kann weiter vorgesehen werden, dass der Flachflansch eine Wanddicke aufweist, welche größer oder gleich der Summe der Wanddicke der Außenwand und der Wanddicke der Wand an der Oberseite der Verstärkungsstrebe ist. Damit wird eine Möglichkeit der Integration von Fügestellen durch Gewindeausformung oder von mechanischen Verbindungselementen in den Flachflansch geschaffen oder eine hinreichend dauerfeste Verschweißungen sichergestellt.

Es kann vorgesehen werden, dass auf einer dem Flachflansch abgewandten Seite der Haupthohlkammer wenigstens eine weitere Hohlkammer ausgebildet ist. Dadurch erhöht sich über die gleiche Breite der Verstärkungsstrebe die Biegesteifigkeit, Verwindungssteifigkeit sowie das Energieaufnahmevermögen in axialer Richtung, insbesondere in Kombination mit Vertiefungen in Endbereichen der weiteren Hohlkammer.

Aber auch im Falle einer Verbreiterung der Verstärkungsstrebe durch die zusätzliche Hohlkammer bei unveränderter Haupthohlkammer werden die Torsionssteifigkeit und das Energieaufnahmevermögen erhöht.

Es ist zusätzlich oder alternativ möglich, dass auf einer dem Flachflansch abgewandten Seite der Haupthohlkammer ein weiterer Flachflansch ausgebildet ist, welcher einen ersten Längenabschnitt aufweist mit einer ersten Längsachse und einen zweiten Längenabschnitt mit einer zweiten Längsachse, wobei ein Winkel Gamma zwischen Hauptlängsachse und erster Längsachse zwischen 20° und 60° beträgt und ein Winkel Delta zwischen Hauptlängsachse und zweiter Längsachse zwischen 20° und 60° beträgt. Damit wird wiederum ein zusätzlicher bzw. erweiterter Lastpfad geschaffen sowie eine flexiblere Kopplungsmöglichkeit der Verstärkungstrebe insbesondere an einer Fahrzeugkarosserie.

Bevorzugt ist erfindungsgemäß vorgesehen, dass die Haupthohlkammer eine Länge aufweist und der Flachflansch sowie der weitere Flachflansch jeweils eine Länge aufweisen, wobei die Länge der Haupthohlkammer um wenigstens 25 Prozent geringer ist als die Länge des Flachflansches und die Länge des weiteren Flachflansches. Dadurch ist eine gewichtsmäßig verbesserte Verstärkungsstrebe bereitgestellt, welche vor allem eine hohe Torsionssteifigkeit aufweist und insbesondere nicht parallel zueinander ausgerichtete Lastpfade bereitstellt. Auch ist die Lasteinleitung bei Kopplung mit komplexen geformten Fahrzeugstrukturen möglich. In dieser Ausführungsvariante sind insbesondere Lastpfadausrichtungen bereitgestellt, die entweder überkreuz, mithin zwei Diagonalen ergebend, oder bogenförmig von einem Endbereich zum gegenüberliegenden Endbereich eines Flachflansches verlaufen.

Das Ausgangshohlprofil der Verstärkungsstrebe besteht bevorzugt aus einer Leichtmetalllegierung, welche stranggepresst wird. Geeignet sind Aluminiumlegierungen, insbesondere der Gruppe 6000 und 7000 nach DIN EN 573-4. Die Verstärkungsstrebe weist eine Streckgrenze Rp0,2 zwischen 180 und 550 MPa beziehungsweise Zugfestigkeit Rm zwischen 200 und 600 MPa auf, je nach Legierung und Anzahl, Dauer und Temperatur der Wärmebehandlung(en) vor oder nach der mechanischen schneidtechnischen und presstechnischen Bearbeitung des Ausgangshohlprofils.

Ein weiterer Aspekt der Erfindung betrifft ein Kraftfahrzeug.

Es wird ein Kraftfahrzeug mit einer Verstärkungsstrebe vorgeschlagen, welches wie vorgehend beschrieben ausgeführt ist, und sich im Kraftfahrzeug quer zur Fahrzeuglängsachse erstreckt. Weiter ist vorgesehen, dass die Verstärkungstrebe einen Tunnel einer Fahrzeugkarosserie des Kraftfahrzeugs überbrückt. Der Tunnel verläuft parallel zur Fahrzeuglängsachse und dient als Bauraum für Getriebekomponenten beziehungsweise für Teile des Antriebstranges oder aber zur geschützten Unterbringung von Hochvoltspeichern eines Elektrofahrzeugs. Der Tunnel trägt wesentlich zur Gesamtsteifigkeit der Fahrzeugkarosserie bei und schützt bei einem Frontalaufprall den Insassenraum. Der Tunnel ist nach unten zur Fahrbahn offen ausgebildet, wobei die Öffnung durch die erfindungsgemäße Verstärkungstrebe überbrückt ist. Durch die Anordnung der Verstärkungstrebe insbesondere mit ihrer Hauptlängsachse quer zur Fahrzeuglängsachse wird erreicht, dass auch im Falle eines Seitenaufpralls, mithin eines Aufpralls quer oder winkelig zur Fahrzeuglängsachse, Aufprallenergie über den Tunnel übertragen und zur dem Aufprallort gegenüberliegenden Fahrzeugseite abgeleitet werden kann. Die Verstärkungstrebe wird durch Kopplung mit der Fahrzeugbodenstruktur, insbesondere mit Bodenblech und/oder Bodenträgern am Kraftfahrzeug befestigt. Auch eine Kopplung mit einer Stirnwand oder einem Längsträgerknotenelement ist zusätzlich insbesondere in den Endbereichen des Flachflansches möglich.

Alternativ kann die Verstärkungstrebe auch Teil eines Achsträgers oder eines Hilfsrahmen eines Fahrzeugfahrwerks sein oder des Kragens.

Die Erfindung wird im Folgenden anhand von schematischen Figuren näher erläutert. Für gleiche und ähnliche Elemente werden, soweit zweckmäßig, dieselben Bezugszeichen verwendet. Sämtliche Merkmale der unterschiedlichen Ausführungsvarianten können im Rahmen der Erfindung kombiniert werden, insbesondere im Hinblick auf die Anzahl der Hohlkammern, die gleichen oder unterschiedlichen Teillängen der Endbereiche sowie die gleichen oder unterschiedlichen Längen der Hohlkammern.

Dabei ergeben sich weitere Ziele, Vorteile und Anwendungsmöglichkeiten der vorliegenden Erfindung aus der nachfolgenden Beschreibung der Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen
- Figuren 1 bis 5:: eine erste Ausführungsvariante einer erfindungsgemäßen Verstärkungsstrebe,
- Figuren 6 bis 9:: eine zweite Ausführungsvariante einer erfindungsgemäßen Verstärkungsstrebe sowie
- Figur 10:: ein erfindungsgemäßes Kraftfahrzeug mit Verstärkungstrebe.

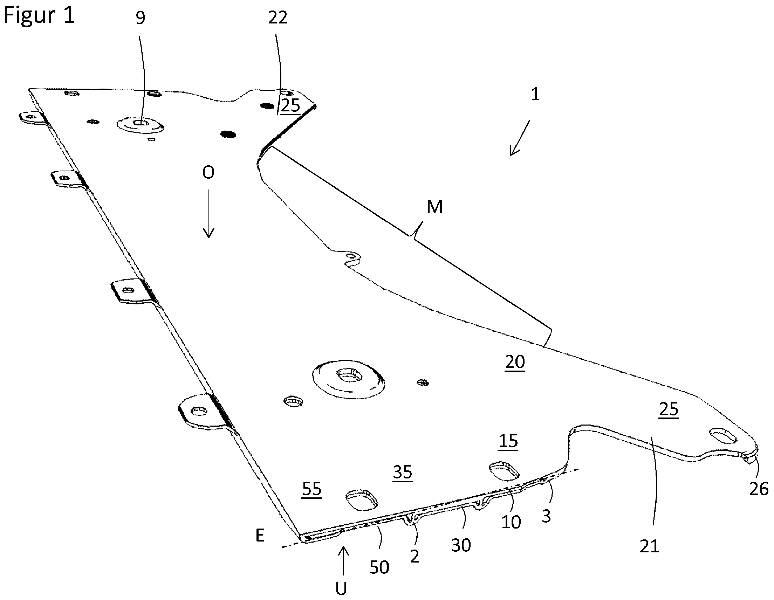

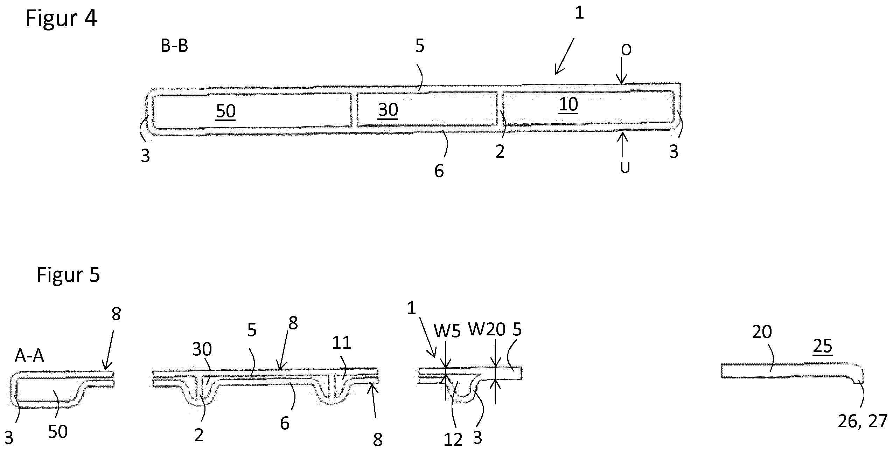

Figur 1 zeigt eine erste Ausführungsvariante der erfindungsgemäßen Verstärkungsstrebe 1 in einer isometrischen Ansicht von oben. Es handelt sich um ein Dreikammerhohlprofil aus Leichtmetall. In der Bildebene links neben der Haupthohlkammer 10 schließen sich zwei weitere Hohlkammern 30, 50 an. Die Haupthohlkammer 10 und die zwei weiteren Hohlkammern 30, 50 weisen jeweils zwei gegenüberliegende, stirnseitige Endbereiche 15, 35, 55 auf, wobei diese eine gleiche Teillänge besitzen, so dass gilt: TL1 = TL3 = TL5 =TL. Alle Endbereiche 15, 35, 55 sind im Querschnitt grabenförmig abgeflacht ausgebildet. In der Bildebene rechts von der Haupthohlkammer 10 schließt sich ein Flachflansch 20 an, welcher längenabschnittsweise von der Haupthohlkammer 10 abgetrennt ausgebildet ist. Der Flachflansch 20 ist, wie in Figur 5 später dargestellt, über die Außenwand 3 mit der Haupthohlkammer 10 verbunden. In dieser Ausführungsform weisen die Endbereiche 25 des Flachflansches 20 im Wesentlichen parallel zueinander verlaufende Kanten 27 auf, so dass sich zwei Arme ausbilden, die nach der Montage im Kraftfahrzeug zwei winkelig zur Hauptlängsachse 13 verlaufende Lastpfade bereitstellen. Zwischen den Endbereichen 15 von Haupthohlkammer 10 und den Endbereichen 25 des Flachflansches 20 besteht teilweise keine Verbindung, da der Flachflansch des Ausgangshohlprofils nach dem Strangpressen in diesem Bereich spanend bearbeitet und entfernt wurde. Ebenso wurde nach dem Strangpressen des Ausgangshohlprofils Material im Mitteabschnitt M in der Bildebene rechts dargestellt zwischen den Endbereichen 25 des Flachflansches 20 entfernt. Je nach Umfang der spanenden Bearbeitungen ergibt sich ein erster, Längenabschnitt 21 und ein zweiter Längenabschnitt 22 im Flachflansch 20, welcher winkelig von der Hauptlängsachse 13 absteht.

Die Haupthohlkammer 10 und der Flachflansch 20 weisen in ihren Endbereichen 15, 25 Fügestellen 9 in Form von Ausnehmungen zur Kopplung mit weiteren Bauteilen der Fahrzeugstruktur auf. Die Haupthohlkammer 10, der Flachflansch 20 sowie die weiteren Hohlkammern 30, 50 weisen eine gemeinsame Oberseite O und eine Unterseite U auf, wobei sich eine Innenwand 2 im Querschnitt von einer Wand 5 an der Oberseite O zu einer Wand 6 an der Unterseite U erstreckt.

Erkennbar ist weiterhin, dass der Flachflansch 20 im Wesentlichen nur in der zur Oberseite O beziehungsweise Unterseite U parallelen Ebene E verläuft, also in dieser Ausführungsvariante nicht senkrecht zur Ebene der Oberseite abgebogen ist. Gleichwohl liegt diese zusätzliche Möglichkeit im Rahmen der Erfindung, um beispielsweise eine optimale Integration in eine häufig komplex geformte Fahrzeugstruktur zu gewährleisten, und/oder um einen zur Ebene der Oberseite der Verstärkungstrebe schräg verlaufenden Lastpfad herzustellen.

Nur ansatzweise erkennbar ist die Längskante 27 des Endbereichs 25 mit ausgeformten und nach unten umgestellten Kragen 26 mit einer Länge L_{K}.

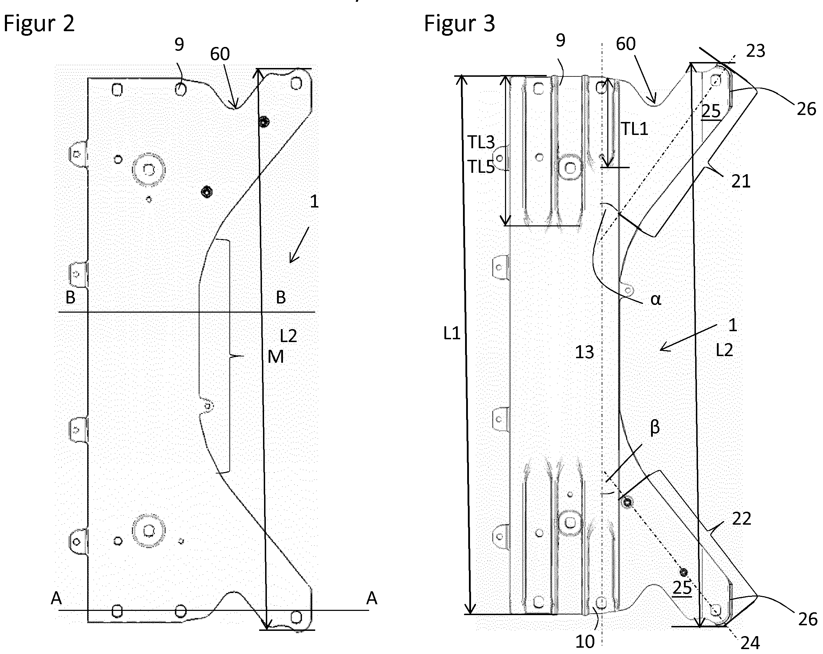

Figur 2 zeigt eine Draufsicht auf die erfindungsgemäße Verstärkungsstrebe der Figur 1. Die Figur 3 zeigt eine entsprechende Sicht von unten. Erkennbar ist, dass der Flachflansch 20 im Mittelabschnitt M mit der Haupthohlkammer 10 und den weiteren Hohlkammern 30, 50 über die Außenwand 3 zusammenhängt, während in Richtung zu den stirnseitigen Endbereichen 15, 25 der Flachflansch 20 von der Haupthohlkammer 10 weg weisend ausgebildet ist. Die Haupthohlkammer 10 weist eine Länge L1 auf, und der Flachflansch 20, in der Bildebene rechts dargestellt, ist längenabschnittsweise von der Haupthohlkammer 10 weg weisend ausgebildet. Der Flachflansch 20 weist eine Länge L2 auf, wobei die Länge L1 der Haupthohlkammer 10 in etwa der Länge L2, gemessen parallel zur Hauptlängsachse 13 der Haupthohlkammer 10 entspricht. Durch die winkelige bogenförmige Gestaltung des Flachflansches 20 von den zwei Endbereichen 25 über den Mittelbereich M ist dieser jedoch bei Messung entlang seiner Längsachsen etwas länger als die Länge L1 der Haupthohlkammer 10.

Im Mittelbereich M sind Haupthohlkammer 10 und Flachflansch 20 teilweise nur über die Außenwand 3 verbunden und der Flachflansch 20 ist im Mittelabschnitt in Richtung der Endbereiche 25 größer beziehungsweise in der Draufsicht breiter werdend ausgebildet. Für die Teillänge TL2 des Flachflansches 20 gilt, dass diese Teillänge TL2 < 0,4 x Länge L2 des Flachflansches 20 beträgt und die Teillängen TL beziehungsweise TL1, TL3, TL5 < 0,4 x Länge L1 beträgt.

In Figur 3 sind besonders gut die Länge L1 der Haupthohlkammer 10 sowie die Teillängen TL1, TL3 und TL5 der im Querschnitt in den Endbereiche 15, 35, 55 grabenförmig abgeflachten Hohlkammer 10, 30 und 50 erkennbar. Zudem weist jeder Endbereich 15, 35, 55 Fügestellen 9 als Ausnehmungen zur Kopplung mit weiteren Bauteilen der Fahrzeugstruktur auf, wodurch eine optimale Befestigung einerseits und gute Lasteinleitung beziehungsweise Lastableitung andererseits bewirkt wird.

Der Flachflansch 20 weist einen ersten Längenabschnitt 21 auf mit einer ersten Längsachse 23 und einen zweiten Längenabschnitt 22 mit einer zweiten Längsachse 24 auf, wobei ein Winkel (α) zwischen Hauptlängsachse 13 und erster Längsachse 23 zwischen 20° und 60° beträgt und ein Winkel (β) zwischen Hauptlängsachse 13 und zweiter Längsachse 24 zwischen 20° und 60° beträgt, so dass der Flachflansch 20 in Richtung seiner Endbereiche 25 abschnittsweise von der Haupthohlkammer 10 weg weisend ausgebildet ist.

Figur 4 zeigt den Schnitt B-B aus Figur 2. Erkennbar sind im Mittelabschnitt M insgesamt drei Hohlkammern. Eine Haupthohlkammer 10, sowie zwei in der Bildebene links davon angeordnete weitere Hohlkammern 30 und 50. Im Mittelabschnitt M sind die Wände auf der Oberseite O und der Unterseite U der Verstärkungstrebe 1 flach beziehungsweise eben ausgebildet und durch die Innenwände 2 und die Außenwände 3 miteinander verbunden.

Im überwiegenden Teil des Mittelbereichs M ist der Flachflansch 20 nur durch die Außenwand 3 gebildet, welche zugleich die Haupthohlkammer 10 der Verstärkungsstrebe 1 nach außen begrenzt. Erst in Richtung der Endbereiche 15, 25 ist der Flachflansch 20 größer beziehungsweise breiter werdend ausgebildet und verläuft dabei winkelig zur Hauptlängsachse 13. Benachbart zu den stirnseitigen Endbereichen 15 der Haupthohlkammer 10 sind die Endbereiche 25 des Flachflansches 20 angeordnet.

In Figur 5, einem Querschnitt auf Höhe des Schnitts A-A der Figur 2 sind die Endbereiche der drei Hohlkammern 50, 30, und 10 deutlich erkennbar und auch, wie diese im Querschnitt grabenförmig abgeflacht sind. Es wird so in den Endbereichen der Hohlkammern eine Doppellage 8 mit keinem oder nur geringfügigem Luftspalt aus der in der Bildebene oberen Wand 5 und der in der Bildebene unteren Wand 6 der Verstärkungsstrebe 1 gebildet, welche sich jeweils zwischen den Außenwänden 3 beziehungsweise den Innenwänden 2 erstreckt. Die Doppellage 8 kann durch eine Verprägung an der Unterseite 6 zwischen den Innenwänden 2 des Ausgangshohlprofils hergestellt werden, wobei erkennbar ist, dass die Hohlkammern 10, 30 und 50 in ihren Endbereichen jeweils in zwei durch die Doppellage 8 geteilte Teilkammern, hier beispielsweise durch die Bezugszeichen 11, 12 für den Endbereich der Haupthohlkammer 10 dargestellt, aufgeteilt werden. In der Bildebene rechts neben der Haupthohlkammer 10 bzw. neben der Teilkammer 12 schließt sich der Flachflansch 20 mit einer Wandstärke W20 an, welche hier in etwa der doppelten Wandstärke W5 der oberen Wand 5 im Bereich der Hohlkammern 10, 30 und 50 oder der Summe aus Wandstärken der oberen Wand 5 und der unteren Wand 6 entspricht.

Die erste Ausführungsvariante ist vor allem als Tunnelverstärkungstrebe verwendbar, welche sich von einem Bodenblech unterhalb des Getriebetunnels zum gegenüberliegenden Bodenblech erstreckt. Bei einem Seitenaufprall dient die Verstärkungsstrebe der Energieaufnahme, Abstützung, Lastleitung von der Aufprallseite zur gegenüberliegenden Fahrzeugseite und der Torsionssteifigkeit der gesamten Fahrzeugstruktur.

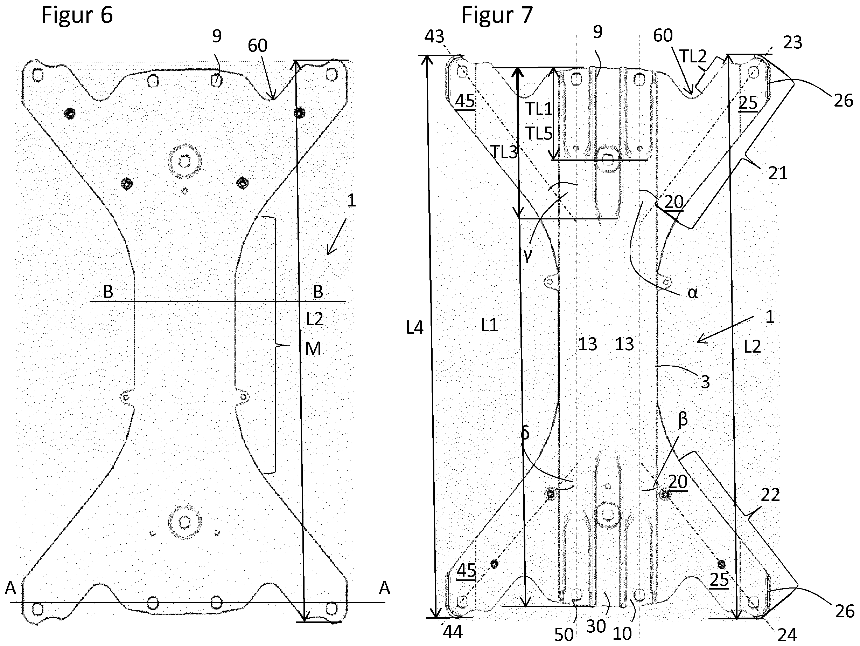

Figur 6 zeigt eine zweite Ausführungsvariante der erfindungsgemäßen Verstärkungsstrebe in einer Draufsicht. Im Gegensatz zur ersten Ausführungsform weist die Verstärkungstrebe 1 einen weiteren Flachflansch 40 in der Bildebene links von der weiteren Hohlkammer 50 auf.

Wie der Flachflansch 20 der ersten Ausführungsvariante so ist auch der Flachflansch wegweisend von der Haupthohlkammer 10 angeordnet und weist vom Ausgangshohlprofil ausgehend beschnittene Endbereiche 45 auf. Es ergibt sich bezüglich der Flachflansche 20, 40 im Wesentlichen ein zur Längsachse der weiteren Hohlkammer 30 symmetrischer Aufbau. Durch den weiteren Flachflansch 40 werden nach dem Einbau ins Kraftfahrzeug zwei zusätzliche Lastpfade bereitgestellt oder die zwei Lastpfade des Flachflansches 20 werden in die zwei Arme des weiteren Flachflansches 40 hinein verlängert. Durch diese erfindungsgemäße Verstärkungsstrebe werden zwei sich kreuzende diagonale Lastpfade und ein durch die Hauptlängsachse verlaufender Lastpfad bereitgestellt.

Figur 7 zeigt die zweite Ausführungsvariante der erfindungsgemäßen Verstärkungsstrebe in einer Sicht von unten. Es handelt sich um ein Dreikammerhohlprofil aus Leichtmetall. Die Haupthohlkammer 10 sowie die sich in der Bildebene links davon angeordnete weiteren Hohlkammern 30, 50 weisen eine Länge L1 auf. Die zwei Flachflansche 20 beziehungsweise 40 weisen jeweils eine Länge L2 beziehungsweise L4 auf, wobei die Länge L1 der Haupthohlkammer 10 um wenigstens 25 Prozent geringer ist als die Länge des Flachflansches 20 und die Länge des Flachflansches 40.

Der Flachflansch weist zwei sich gegenüberliegende, stirnseitige Endbereiche 25 auf, wobei diese Endbereiche 25 wenigstens einseitig einen Kragen 26 parallel zur ersten Längsachse 23 beziehungsweise parallel zur zweiten Längsachse 24 aufweisen. Der Kragen 26 kann wie die Doppellagen 8 pressformtechnisch hergestellt sein. Der Kragen 26 ist hier nur auf der Außenseite ausgebildet und weist eine Länge L_{K} auf, welche größer oder gleich der Teillänge TL2 des Endbereichs 25 ist. Im Falle eines zusätzlichen Kragens auf der gegenüberliegenden Seite des Kragens 26 würde dieser Kragen eine Länge aufweisen, welche maximal der Teillänge TL2 entspricht.

Auch der weitere Flachflansch 40 weist zwei sich gegenüberliegende, stirnseitige Endbereiche 45 auf, wobei diese Endbereiche 45 wenigstens einseitig einen Kragen 26 parallel zur ersten Längsachse 43 beziehungsweise parallel zur zweiten Längsachse 44 aufweisen.

Der Flachflansch 20 und der Flachflansch 40 weisen stirnseitige Endbereiche 25, 45 mit jeweils einer Teillänge TL auf, wobei die Teillänge TL kleiner als 0,2 mal der Länge L2 des Flachflansches 20 beziehungsweise der Länge L4 des Flachflansches 40 ist. Die Teillänge ist umso größer, je großflächiger beziehungsweise in der Draufsicht tiefer ein Beschnitt des Ausgangshohlprofils zwischen den stirnseitigen Endbereichen 25 des Flachflansches 20 und der Haupthohlkammer 10 ausgeführt wurde. Die Teillängen TL der Endbereiche 25, 45 der Flachflansche 20, 40 können je nach Einbausituation auch voneinander verschieden sein.

Zwischen den Endbereichen 55 von Hohlkammer 50 und den Endbereichen 45 des Flachflansches 40 besteht teilweise keine Verbindung, da auch dieser Flachflansch des Ausgangshohlprofils nach dem Strangpressen in diesem Bereich spanend bearbeitet und entfernt wurde. Ebenso wurde nach dem Strangpressen des Ausgangshohlprofils Material im Mitteabschnitt M in der Bildebene rechts dargestellt zwischen den Endbereichen 45 des Flachflansches 40 entfernt. Je nach Umfang der spanenden Bearbeitungen ergibt sich ein erster, Längenabschnitt 41 und ein zweiter Längenabschnitt 42 im Flachflansch 40, welcher winkelig von der Hauptlängsachse 13 absteht.

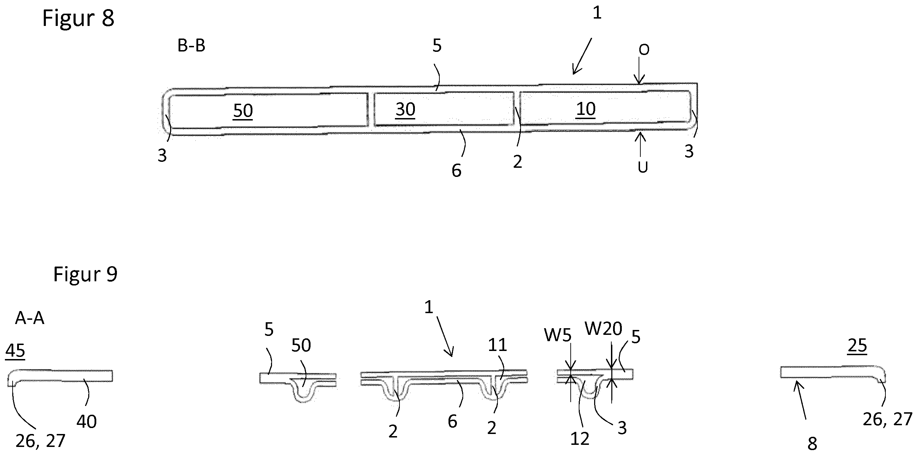

Figur 8 zeigt einen Querschnitt des Schnitts B-B aus Figur 6. Erkennbar ist ein Dreikammerprofil mit der Haupthohlkammer 10 und zwei links davon angeordneten weiteren Hohlkammern 30 und 50. Die Hohlkammern werden an der Oberseite O der Verstärkungsstrebe 1 durch eine Wand 5 und an der Unterseite U der Verstärkungsstrebe durch eine Wand 6 begrenzt. Durch Zwischenwände 2 sind die Hohlkammern 50, 30 und 10 voneinander getrennt ausgebildet. Durch Außenwände 3 wird die Verstärkungsstrebe 1 nach außen begrenzt. Dieser Querschnittsverlauf ist über einen Teil des Mittelabschnitts M homogen ausgebildet. In Richtung der Endbereiche der Verstärkungsstrebe schließt sich jedoch an der Außenwand 3 in der Bildebene rechts ein Flachflansch 20 an, der Richtung Endbereiche breiter beziehungsweise größer wird.

Figur 9 zeigt einen Querschnitt A-A aus Figur 6, welcher durch die Endbereiche 15, 25, 55 der Hohlkammern 10, 30, 50 und durch die Endbereiche 25, 45 der Flachflansche 20 und 40 verläuft. Erkennbar ist, dass die Hohlkammern in den stirnseitigen Endbereichen zum Beispiel durch Verprägen zu Doppellagen 8 grabenförmig abgeflacht ausgebildet sind. Erkennbar ist zudem, dass die Hohlkammern 10, 30 und 50 in ihren Endbereichen jeweils in zwei durch die Doppellage 8 geteilte Teilkammern, hier beispielsweise durch die Bezugszeichen 11, 12 für den Endbereich 15 der Haupthohlkammer 10 dargestellt, aufgeteilt werden. Auch sind Fügestellen 9 zur Kopplung an weitere Fahrzeugbauteile vorgesehen. Weiterhin sind die Flachflansche 20 und 40 erkennbar, welche hier einen in der Bildebene nach unten abgebogenen Kragen 26 aufweisen. Zwischen Endbereich 25 des Flachflansches 20 und der Haupthohlkammer 10 ist ursprünglich am Ausgangshohlprofil extrudiertes Material des Flachflansches entfernt worden, so dass bis zu einer bestimmten Teillänge TL2 (gemäß Figur 7) eine Ausnehmung vorliegt. Das gleiche gilt für den weiteren Flachflansch entsprechend.

Die zweite Ausführungsvariante ist besonders als Hilfsrahmen zwischen den unteren Längsträgern des Vorderwagens des Kraftfahrzeugs verwendbar.

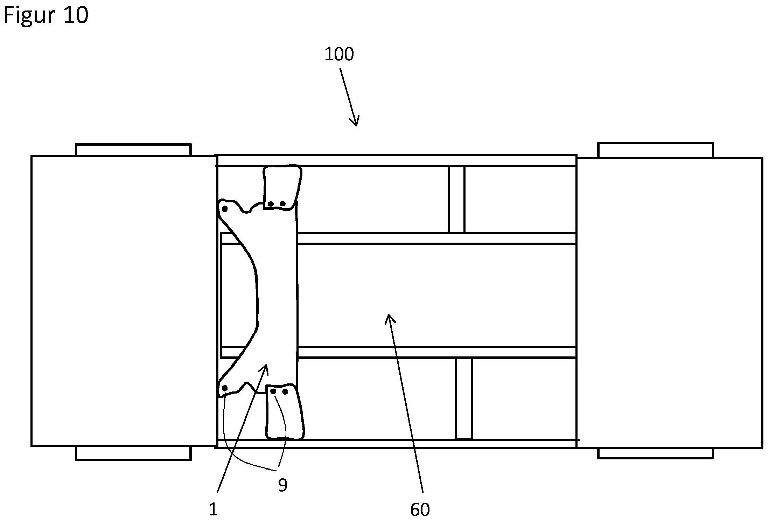

Figur 10 zeigt ein erfindungsgemäßes Kraftfahrzeug 100 in einer stark vereinfachten Darstellung von unten. Das Kraftfahrzeug 100 weist einen Tunnel 60 auf, welcher sich mittig entlang der Fahrzeuglängsachse X erstreckt und einen Teil der Fahrzeugkarosserie bildet. Quer zum Tunnel 60 ist eine erfindungsgemäße Verstärkungsstrebe 1 angeordnet. Die Verstärkungstrebe 1 erstreckt sich damit auch quer zur Fahrzeuglängsachse X und stellt nach der Kopplung mit Teilen der Fahrzeugkarosserie über Fügstellen 9 zusätzliche Lastpfade dar.

### Bezugszeichenliste

- 1: Verstärkungsstrebe
- 2: Innenwand
- 3: Außenwand
- 5: Wand
- 6: Wand
- 8: Doppellage
- 9: Fügestelle
- 10: Haupthohlkammer
- 11: Teilkammer zu 10
- 12: Teilkammer zu 10
- 13: Hauptlängsachse
- 15: Endbereich zu 10
- 20: Flachflansch
- 21: Erster Längenabschnitt
- 22: Zweiter Längenabschnitt
- 23: Erste Längsachse zu 21
- 24: Zweite Längsachse zu 22
- 25: Endbereich zu 20
- 26: Kragen
- 30: Weitere Hohlkammer
- 35: Endbereich zu 30
- 40: Flachflansch
- 41: erster Längenabschnitt
- 42: zweiter Längenabschnitt
- 43: erste Längsachse zu 41
- 44: zweite Längsachse zu 42
- 45: Endbereich zu 40
- 50: Weitere Hohlkammer
- 55: Endbereich zu 50
- 60: Tunnel
- 100: Kraftfahrzeug
- L1: Länge zu 10
- L2: Länge zu 20
- L3: Länge zu 30
- L4: Länge zu 40
- L_{K}: Länge zu 26
- TL1: Teillänge
- TL2: Teillänge
- TL3: Teillänge
- TL4: Teillänge
- TL5: Teillänge
- W3: Wanddicke
- W5: Wanddicke
- W20: Wanddicke
- M: Mittelabschnitt
- E: Ebene
- O: Oberseite
- U: Unterseite
- X: Fahrzeuglängsachse

## Patentansprüche

1. Verstärkungsstrebe (1) für ein Kraftfahrzeug, umfassend ein längliches Mehrkammerprofil mit einer entlang einer Hauptlängsachse (13) verlaufenden Haupthohlkammer (10) und einem daneben angeordneten Flachflansch (20), wobei der Flachflansch (20) einen ersten Längenabschnitt (21) mit einer ersten Längsachse (23) und einen zweiten Längenabschnitt (22) mit einer zweiten Längsachse (24) aufweist, wobei ein Winkel (α) zwischen der Hauptlängsachse (13) und der ersten Längsachse (23) zwischen 20° und 60° beträgt und ein Winkel (β) zwischen der Hauptlängsachse (13) und der zweiten Längsachse (24) zwischen 20° und 60° beträgt, **dadurch gekennzeichnet, dass** die Haupthohlkammer (10) eine Wand (5) an der Oberseite (O) und eine Wand (6) an der Unterseite (U) aufweist, wobei die Wand (6) an der Unterseite (U) in Richtung Flachflansch (20) in eine Außenwand (3) übergeht, und die Wand (5) sowie die Außenwand (3) gemeinsam in den Flachflansch (20) übergehen.

2. Verstärkungsstrebe (1) nach Anspruch 1, **dadurch gekennzeichnet, dass** die Haupthohlkammer (10) zwei gegenüberliegende, stirnseitige Endbereiche (15) aufweist, und die Haupthohlkammer (10) in den Endbereiche (15) abgeflacht ist.

3. Verstärkungsstrebe (1) nach Anspruch 1 oder 2, **dadurch gekennzeichnet, dass** der Flachflansch (20) zwei gegenüberliegende, stirnseitige Endbereiche (25) aufweist, und der Flachflansch (20) in den Endbereichen (25) einen Kragen (26) aufweist.

4. Verstärkungsstrebe (1) nach Anspruch 2 oder 3, **dadurch gekennzeichnet, dass** die Haupthohlkammer (10) und/oder der Flachflansch (20) in ihren Endbereichen (15, 25) Fügestellen (9) zur Kopplung mit weiteren Bauteilen der Fahrzeugstruktur aufweist.

5. Verstärkungsstrebe (1) nach einem der vorherigen Ansprüche, **dadurch gekennzeichnet, dass** die Haupthohlkammer (10) eine Länge L1 aufweist und ein Endbereich (15) der Haupthohlkammer (10) eine Teillänge TL1 aufweist, wobei gilt: TL1 <= 0,4 x L1.

6. Verstärkungsstrebe (1) nach wenigstens Anspruch 3 oder 4, **dadurch gekennzeichnet, dass** der Flachflansch (20) eine Länge L2 aufweist und der Endbereich (25) des Flachflansches (20) über eine Teillänge TL22 parallel zueinander verlaufende Längskanten (27) aufweist, wobei gilt: TL2 <= 0,4 x L2.

7. Verstärkungsstrebe (1) nach einem der vorherigen Ansprüche, **dadurch gekennzeichnet, dass** der Flachflansch (20) eine Wanddicke W20 aufweist, welche größer oder gleich der Summe der Wanddicke W3 der Außenwand (3) und der Wanddicke W5 der Wand (5) an der Oberseite (O) ist.

8. Verstärkungsstrebe (1) nach einem der Ansprüche 1 bis 7, **dadurch gekennzeichnet, dass** auf einer dem Flachflansch (20) abgewandten Seite der Haupthohlkammer (10) wenigstens eine weitere Hohlkammer (30, 50) ausgebildet ist.

9. Verstärkungsstrebe (1) nach einem der Ansprüche 1 bis 8, **dadurch gekennzeichnet, dass** auf einer dem Flachflansch (20) abgewandten Seite der Haupthohlkammer (10) eine weiterer Flachflansch (40) ausgebildet ist, welcher einen ersten Längenabschnitt (41) aufweist mit einer ersten Längsachse (43) und einen zweiten Längenabschnitt (42) mit einer zweiten Längsachse (44), wobei ein Winkel Gamma (γ) zwischen der Hauptlängsachse (13) und der ersten Längsachse (43) zwischen 20° und 60° beträgt und ein Winkel Delta (δ) zwischen der Hauptlängsachse (13) und der zweiten Längsachse (44) zwischen 20° und 60° beträgt.

10. Verstärkungsstrebe (1) nach einem der Ansprüche 1 bis 9, **dadurch gekennzeichnet, dass** die Haupthohlkammer (10) eine Länge L1 aufweist und der Flachflansch (20) sowie die weitere Flachflansch (40) jeweils eine Länge L2, L4 aufweisen, wobei die Länge L1 der Haupthohlkammer (10) um wenigstens 25 Prozent geringer ist als die Länge L2 des Flachflansches (20) und die Länge L4 des weiteren Flachflansches (40).

11. Verstärkungsstrebe (1) nach einem der Ansprüche 2 bis 10, **dadurch gekennzeichnet, dass** die Haupthohlkammer (10) in den Endbereichen (15) im Querschnitt grabenförmig abgeflacht ist oder Fügestellen in Form von Ausnehmungen zur Kopplung mit weiteren Bauteilen der Fahrzeugstruktur aufweist, oder dass der Flachflansch (20) zwei gegenüberliegende, stirnseitige Endbereiche (25) aufweist, welche Fügestellen (9) in Form einer Ausnehmung zur Kopplung mit weiteren Bauteilen der Fahrzeugstruktur aufweisen.

12. Kraftfahrzeug (100) mit einer Verstärkungsstrebe (1) gemäß einem der vorherigen Ansprüche, **dadurch gekennzeichnet, dass** die Verstärkungsstrebe (1) sich quer zur Fahrzeuglängsachse (X) erstreckt und einen Tunnel (60) einer Fahrzeugkarosserie des Kraftfahrzeugs (100) überbrückt.

## Claims

1. Reinforcing strut (1) for a motor vehicle, comprising an elongate multi-chamber profile having a main hollow chamber (10) extending along a main longitudinal axis (13), and having a flat flange (20) arranged alongside said chamber, wherein the flat flange (20) has a first longitudinal portion (21) with a first longitudinal axis (23) and a second longitudinal portion (22) with a second longitudinal axis (24), wherein an angle ( ) between the main longitudinal axis (13) and the first longitudinal axis (23) is between 20° and 60° and an angle ( ) between the main longitudinal axis (13) and the second longitudinal axis (24) is between 20° an 60°, **characterized in that** the main hollow chamber (10) has a wall (5) on the upper side (O) and a wall (6) on the underside (U), wherein the wall (6) on the underside (U) merges into an outer wall (3) in the direction of the flat flange (20), and the wall (5) and the outer wall (3) together merge into the flat flange (20).

2. Reinforcing strut (1) according to Claim 1, **characterized in that** the main hollow chamber (10) has two mutually opposite, terminal end regions (15), and the main hollow chamber (10) is flattened in the end regions (15).

3. Reinforcing strut (1) according to Claim 1 or 2, **characterized in that** the flat flange (20) has two mutually opposite, terminal end regions (25), and the flat flange (20) has a collar (26) in the end regions (25).

4. Reinforcing strut (1) according to Claim 2 or 3, **characterized in that** the main hollow chamber (10) and/or the flat flange (20) have/has, in their end regions (15, 25), joining locations (9) for coupling to further components of the vehicle structure.

5. Reinforcing strut (1) according to one of the preceding claims, **characterized in that** the main hollow chamber (10) has a length L1 and an end region (15) of the main hollow chamber (10) has a partial length TL1, where the following holds: TL1 0.4 x L1.

6. Reinforcing strut (1) according to at least Claim 3 or 4, **characterized in that** the flat flange (20) has a length L2 and the end region (25) of the flat flange (20) has longitudinal edges (27) extending parallel to one another over a partial length TL2₂ where the following holds: TL2 0.4 x L2.

7. Reinforcing strut (1) according to one of the preceding claims, **characterized in that** the flat flange (20) has a wall thickness W20 which is greater than or equal to the sum of the wall thickness W3 of the outer wall (3) and the wall thickness W5 of the wall (5) on the upper side (O).

8. Reinforcing strut (1) according to one of Claims 1 to 7, **characterized in that** at least one further hollow chamber (30, 50) is formed on a side of the main hollow chamber (10) facing away from the flat flange (20).

9. Reinforcing strut (1) according to one of Claims 1 to 8, **characterized in that** a further flat flange (40) is formed on a side of the main hollow chamber (10) facing away from the flat flange (20) and has a first longitudinal portion (41) with a first longitudinal axis (43) and a second longitudinal portion (42) with a second longitudinal axis (44), wherein an angle gamma ( ) between the main longitudinal axis (13) and the first longitudinal axis (43) is between 20° and 60° and an angle delta ( ) between the main longitudinal axis (13) and the second longitudinal axis (44) is between 20° and 60°.

10. Reinforcing strut (1) according to one of Claims 1 to 9, **characterized in that** the main hollow chamber (10) has a length L1 and the flat flange (20) and the further flat flange (40) have a respective length L2, L4, wherein the length L1 of the main hollow chamber (10) is less by at least 25 per cent than the length L2 of the flat flange (20) and the length L4 of the further flat flange (40).

11. Reinforcing strut (1) according to one of Claims 2 to 10, **characterized in that** the main hollow chamber (10) is flattened in the end regions (15) so as to be trenchshaped in cross section or has joining locations in the form of cutouts for coupling with further components of the vehicle structure, or **in that** the flat flange (20) has two mutually opposite, terminal end regions (25) which have joining locations (9) in the form of a cutout for coupling with further components of the vehicle structure.

12. Motor vehicle (100) having a reinforcing strut (1) according to one of the preceding claims, **characterized in that** the reinforcing strut (1) extends transversely with respect to the vehicle longitudinal axis (X) and bridges a tunnel (60) of a vehicle body of the motor vehicle (100).

## Revendications

1. Contrefiche de renforcement (1) pour un véhicule automobile, comprenant un profilé longitudinal à chambres multiples ayant une chambre creuse principale (10) qui suit un tracé le long d un axe longitudinal principal (13) et une bride plate (20) disposée à côté de celle-ci, la bride plate (20) possédant une première portion longitudinale (21) ayant un premier axe longitudinal (23) et une deuxième portion longitudinale (22) ayant un deuxième axe longitudinal (24), un angle ( ) entre l axe longitudinal principal (13) et le premier axe longitudinal (23) étant compris entre 20° et 60° et un angle ( ) entre l axe longitudinal principal (13) et le deuxième axe longitudinal (24) étant compris entre 20° et 60°, **caractérisée en ce que** la chambre creuse principale (10) possède une paroi (5) au niveau du côté supérieur (O) et une paroi (6) au niveau du côté inférieur (U), la paroi (6) au niveau du côté inférieur (U) se transformant en une paroi externe (3) dans la direction de la bride plate (20) et la paroi (5) ainsi que la paroi externe (3) se transformant ensemble en la bride plate (20).

2. Contrefiche de renforcement (1) selon la revendication 1, **caractérisée en ce que** la chambre creuse principale (10) possède deux zones d extrémité (15) opposées côté frontal et la chambre creuse principale (10) est aplatie dans les zones d extrémité (15).

3. Contrefiche de renforcement (1) selon la revendication 1 ou 2, **caractérisée en ce que** la bride plate (20) possède deux zones d extrémité (25) opposées côté frontal et la bride plate (20) possède une collerette (26) dans les zones d extrémité (25).

4. Contrefiche de renforcement (1) selon la revendication 2 ou 3, **caractérisée en ce que** la chambre creuse principale (10) et/ou la bride plate (20) possèdent dans leurs zones d extrémité (15, 25) des points de jonction (9) servant à l accouplement avec d autres éléments structuraux de la structure de véhicule.

5. Contrefiche de renforcement (1) selon l une des revendications précédentes, **caractérisée en ce que** la chambre creuse principale (10) présente une longueur L1 et une zone d extrémité (15) de la chambre creuse principale (10) présente une longueur partielle TL1, avec pour règle : TL1 <= 0,4 x L1.

6. Contrefiche de renforcement (1) selon au moins la revendication 3 ou 4, **caractérisée en ce que** la bride plate (20) présente une longueur L2 et la zone d extrémité (25) de la bride plate (20) possède des bords longitudinaux (27) qui suivent un tracé parallèle l un à l autre sur une longueur partielle TL2₂, avec pour règle : TL2 <= 0,4 x L2.

7. Contrefiche de renforcement (1) selon l une des revendications précédentes, **caractérisée en ce que** la bride plate (20) présente une épaisseur de paroi W20 qui est égale ou supérieure à la somme de l épaisseur de paroi W3 de la paroi externe (3) et de l épaisseur de paroi W5 de la paroi (5) au niveau du côté supérieur (O).

8. Contrefiche de renforcement (1) selon l une des revendications 1 à 7, **caractérisée en ce qu** au moins une chambre creuse supplémentaire (30, 50) est formée sur un côté de la chambre creuse principale (10) à l opposé de la bride plate (20).

9. Contrefiche de renforcement (1) selon l une des revendications 1 à 8, **caractérisée en ce qu** une bride plate supplémentaire (40) est formée sur un côté de la chambre creuse principale (10) à l opposé de la bride plate (20), laquelle possède une première portion longitudinale (41) ayant un premier axe longitudinal (43) et une deuxième portion longitudinale (42) ayant un deuxième axe longitudinal (44), un angle Gamma ( ) entre l axe longitudinal principal (13) et le premier axe longitudinal (43) étant compris entre 20° et 60° et un angle Delta ( ) entre l axe longitudinal principal (13) et le deuxième axe longitudinal (44) étant compris entre 20° et 60°.

10. Contrefiche de renforcement (1) selon l une des revendications 1 à 9, **caractérisée en ce que** la chambre creuse principale (10) présente une longueur L1 et la bride plate (20) ainsi que la bride plate supplémentaire (40) présentent respectivement une longueur L2, L4, la longueur L1 de la chambre creuse principale (10) étant 25 pour cent inférieure à la longueur L2 de la bride plate (20) et à la longueur L4 de la bride plate supplémentaire (40).

11. Contrefiche de renforcement (1) selon l une des revendications 2 à 10, **caractérisée en ce que** la chambre creuse principale (10) est aplatie dans les zones d extrémité (15) en forme de tranchée en coupe transversale ou possède des points de jonction sous la forme de creux servant à l accouplement avec d autres éléments structuraux de la structure de véhicule, ou **en ce que** la bride plate (20) possède deux zones d extrémité (25) opposées côté frontal, lesquelles possèdent des points de jonction (9) sous la forme d un creux servant à l accouplement avec d autres éléments structuraux de la structure de véhicule.

12. Véhicule automobile (100) comprenant une contrefiche de renforcement (1) selon l une des revendications précédentes, **caractérisé en ce que** la contrefiche de renforcement (1) s étend transversalement par rapport à l axe longitudinal du véhicule (X) et ponte un tunnel (60) d une carrosserie de véhicule du véhicule automobile (100).
